# EUROPÄISCHE PATENTSCHRIFT

(11) **EP 2 265 903 B1**
(45) Veröffentlichungstag und Bekanntmachung des Hinweises auf die Patenterteilung: **08.07.2015**
(21) Anmeldenummer: 09729722.0
(22) Anmeldetag: 02.04.2009
(51) Int. Cl.: G01D 5/22

(54) **POSITIONSERKENNUNGSVORRICHTUNG FÜR EIN GETRIEBE ODER EINE BREMSEINRICHTUNG UND GETRIEBE SOWIE BREMSEINRICHTUNG MIT EINER DERARTIGEN VORRICHTUNG**
POSITION RECOGNITION DEVICE FOR A TRANSMISSION OR A BRAKING MECHANISM, AND TRANSMISSION AND BRAKING MECHANISM COMPRISING SUCH A DEVICE
DISPOSITIF DE DÉTECTION DE POSITION POUR UNE BOÎTE DE VITESSES OU UN SYSTÈME DE FREINAGE ET BOÎTE DE VITESSES ET SYSTÈME DE FREINAGE DOTÉS D'UN TEL DISPOSITIF

(30) Priorität: 11.04.2008 DE 102008018465
(43) Veröffentlichungstag der Anmeldung: 29.12.2010
(73) Patentinhaber: KNORR-BREMSE Systeme für Nutzfahrzeuge GmbH, 80809 München (DE)
(72) Erfinder: HUBER, Christian, 80937 München (DE)
(74) Vertreter: Schönmann, Kurt
(86) Internationale Anmeldenummer: PCT/EP2009/002394
(87) Internationale Veröffentlichungsnummer: WO 2009/124683

(56) Entgegenhaltungen:
- EP-A- 0 795 738
- DE-A1- 4 343 612
- US-A- 3 101 462

## Beschreibung

Die Erfindung betrifft eine Positionserkennungsvorrichtung insbesondere für ein Getriebe oder eine Bremseinrichtung, ein Getriebe mit einer Positionserkennungsvorrichtung und eine Bremseinrichtung mit einer Positionserkennungsvorrichtung.

Eine Positionserkennungsvorrichtung ist aus der DE 201 20 658 U1 bekannt. Diese herkömmliche induktive Positionserkennungsvorrichtung verwendet einen Positionsgeber als Bedämpfungselement, der im Bereich einer Planarspule angeordnet ist. Der Positionsgeber ist im Zentrum der ringförmigen Planarspule auf einer axial verschieb- und drehbaren Stange befestigt, wobei eine Mess- und Auswerteeinheit aufgrund der Induktionsänderung die Lage des Positionsgebers ermittelt. Dadurch ist neben der Wegerfassung eine Drehwinkelerfassung des Positionsgebers möglich. Nachteilig bei einer derartigen Vorrichtung ist, dass es zur Montage bzw. Demontage der Planarspule erforderlich ist, die Stange zu demontieren. Ein einfaches Aufsetzen oder Abnehmen der Planarspule ist nicht möglich. Dadurch ist die Montage bzw. Demontage der Planarspule fertigungstechnisch aufwendig.

Die EP0 795 738 A1 beschreibt eine lineare Positionserkennungsvorrichtung, die mittels Induktion arbeitet. Hierfür werden übliche Spulenelemente verwendet, die vollständig um einen Positionsgeber herum laufend angeordnet sind oder in einem von dem Positionsgeber separaten Bauteil eingeschlossen sind. Der Austausch der Spulenelemente ist damit nur unter schwierigen Bedingungen möglich.

In der DE 43 43 612 A1 werden ein Verfahren und eine Vorrichtung zur Bestimmung der Elastizität von Materialien beschrieben. Auch hier findet eine übliche Spule Verwendung, die den ihr zugeordneten Positionsgeber vollständig umläuft.

Die US 3,101,462 zeigt einen Signalerzeuger für lineare Bewegungen mit einem magnetischen Sensor. Die bei dieser Vorrichtung verwendete Spule hat ebenfalls eine Erstreckung in allen drei Dimensionen und ist vollständig in einem Gehäuse aufgenommen, um den Positionsgeber vollumfänglich zu umlaufen.

Aufgabe der Erfindung ist, eine Positionserkennungsvorrichtung sowie ein Getriebe und eine Bremseinrichtung mit einer derartigen Vorrichtung zu schaffen, die eine einfach montierbare bzw. demontierbare Planarspule aufweist.

Diese Aufgabe wird mit den Merkmalen der unabhängigen Patentansprüche gelöst. Weitere Ausführungsformen sind in den auf diese rückbezogenen Unteransprüche angegeben.

Nach der Erfindung ist eine Positionserkennungsvorrichtung mit einem Gehäuseteil, mit zumindest einer von diesem aufgenommenen und einer Planarspule zur Erzeugung eines Magnetfelds in einem Magnetfeldbereich, mit mindestens einem von einer relativ zum Gehäuseteil bewegbaren Stell-Vorrichtung gehaltenen Positionsgeber und mit einer mit der Planarspule funktional gekoppelten Mess- und Auswerteeinrichtung vorgesehen. Der Positionsgeber ist derart im Magnetfeldbereich angeordnet, dass eine Bewegung des Positionsgebers mittels der Stell-Vorrichtung eine Induktivitätsänderung der Planarspule verursacht und die Mess- und Auswerteeinrichtung eine Funktion aufweist, mit der die Induktivitätsänderung der Planarspule erfasst und daraus die Position der Stell-Vorrichtung ermittelt wird. Das Gehäuseteil weist eine Ausnehmung mit einer Innenwand auf, die derart gestaltet ist, dass das Gehäuseteil den Außenumfang der Planarspule abschnittsweise umläuft.

Die erfindungsgemäße Positionserkennungsvorrichtung verwendet also zumindest eine Planarspule, die ein Magnetfeld erzeugt und mindestens einen im Bereich des Magnetfelds angeordneten Positionsgeber. Die Planarspule und der Positionsgeber sind relativ zueinander bewegbar und der Positionsgeber erzeugt dabei Wirbelstromverluste, die eine Induktivitätsänderung der Planarspule verursachen. Die Mess- und Auswerteeinrichtung erfasst die Induktivitätsänderung der Planarspule und ermittelt daraus die Position des Positionsgebers.

Der Positionsgeber kann dazu aus einem elektrisch leitfähigen Material und insbesondere aus einem nichtmagnetischem Material wie Aluminium und/oder Kupfer gebildet sein.

Erfindungsgemäß kann der der Positionsgeber ringförmig gebildet sein und dabei insbesondere einen Querschnitt mit einer kreisförmigen Innenkontur und/oder einer kreisförmigen Außenkontur aufweisen.

Die Ausnehmung des Gehäuseteils kann einen Querschnitt aufweisen, bei dem die Ausnehmung bei Aufnahme des Positionsgebers ein Zentrum desselben mit einem Winkelbereich umgibt, der zwischen 90 Grad und 200 Grad gelegen ist. Das Zentrum kann bei der ringförmigen Ausbildung des Positionsgebers der Flächenmittelpunkt und generell der Flächenschwerpunkt eines Querschnitts der Verstell-Vorrichtung sein, der quer oder vertikal zur Längsachse derselben verläuft. Insbesondere kann die Ausnehmung einen Querschnitt mit einer kreisabschnittsförmigen Innenkontur aufweisen, die einen Öffnungswinkel zwischen 90 Grad und 200 Grad hat.

Dadurch ist die Planarspule einem den Positionsgeber abschnittsweise umgreifenden Gehäuseteil oder Abnehmergehäuse zugeordnet, wobei das Gehäuseteil zumindest eine Ausnehmung zur radialen Montage und Demontage auf bzw. von dem Positionsgeber aufweist. Dadurch ist das Gehäuseteil mit der Planarspule fertigungstechnisch einfach, ohne Demontage des Positionsgebers radial, beispielsweise auf eine Schaltstange eines Getriebes, aufsetz- und abnehmbar. Bei dieser Lösung erfolgt die Montage bzw. Demontage des Gehäuseteils mit der Planarspule vorzugsweise etwa senkrecht zu der Relativbewegungsrichtung des Positionsgebers relativ zu dem Gehäuseteil. Weiterhin ist vorteilhaft, dass die Montage und Demontage des Gehäuseteils auch unter begrenzten Platzverhältnissen, beispielsweise in einem Fahrzeuggetriebe, durchgeführt werden kann.

Die Mess- und Auswerteeinrichtung ist vorzugsweise derart ausgelegt, dass diese Informationen über einen vom Positionsgeber zurückgelegten Weg bereitstellt. Die zumindest eine Planarspule kann sich insbesondere über die gesamte Messstrecke oder darüber hinaus erstrecken. Dadurch wird eine Vielzahl von Magnetfeldlinien des Magnetfelds von dem Positionsgeber geschnitten und eine große Änderung der Induktivität erreicht. Die Bedämpfung durch den Positionsgeber verändert die Induktivität und dadurch die Frequenz des vorzugsweise als Reihen- oder Parallelschwingkreis ausgebildeten Schwingkreises zur Positionsermittlung.

Die Planarspule ist bei einem bevorzugten Ausführungsbeispiel räumlich getrennt oder beabstandet von dem Positionsgeber in dem Gehäuseteil angeordnet. Aufgrund der räumlichen Trennung ist die Planarspule geschützte vor äußeren Einflüssen, wie Öl und Metallpartikeln. Dadurch wird eine Verschmutzung der Planarspule wirkungsvoll verhindert und eine dauerhafte Funktion der Messanordnung mit hoher Messgenauigkeit sichergestellt.

Als besonders vorteilhaft hat es sich erwiesen, wenn die Planarspule an einer Innenumfangswandung des Gehäuseteils befestigt ist und den Positionsgeber vorzugsweise halbkreisförmig in einem Winkelbereich von etwa 180° umgreift. Dadurch wird eine großflächige Anordnung der Planarspule mit einer entsprechend hohen Feldstärke erreicht, so dass relativ große Luftspalte zwischen der Planarspule und dem Positionsgeber möglich sind. Da der Positionsgeber näherungsweise kreisförmig umgriffen ist, hat eine Luftspaltänderungen durch seitlichen Versatz des Positionsgebers relativ zu der Ausnehmung des Gehäuseteils lediglich einen geringen Einfluss auf das Messergebnis.

Bei einer besonders einfachen Lösung bildet die Planarspule einen Erreger und einen Aufnehmer aus. Das Magnetfeld der Planarspule erzeugt in dem elektrisch leitenden Positionsgeber einen elektrischen Wirbelstrom. Dieser Wirbelstrom bewirkt ein sekundäres Magnetfeld, welches das ursächliche Magnetfeld überlagert und dämpft. Das ursächliche Magnetfeld wird von der Planarspule erzeugt, so dass ihre Induktivität durch die Feldschwächung lageabhängig verkleinert wird und zur Positionsermittlung dient.

Die zumindest eine Planarspule ist vorzugsweise als gedruckte Schaltung auf einer Leiterplatte (PCB Printed Circuit Board) oder einer flexiblen Folie (Flexfolie) ausgebildet. Es wird bevorzugt, die Planarspule entsprechend der Krümmung der Ausnehmung an der Innenumfangswandung des Gehäuseteil zu fixieren.

Ferner kann die Planarspule eine Multilayer-Anordnung aufweisen. Hierbei werden mehrere dünne Leiterplatten miteinander verbunden, beispielsweise verklebt. Diese mehrlagigen Leiterplatten können eine Vielzahl von Schichten aufweisen und ermöglichen eine hohe Felddichte bei äußerst kompaktem Aufbau der Planarspule.

Zur Steigerung der Induktivität können zwei oder mehr Planarspulen übereinander als Stapel angeordnet werden. Hierbei finden vorzugsweise einlagige Leiterplatten oder Multilayer-Leiterplatten Verwendung.

Bei einem besonders bevorzugten Ausführungsbeispiel der Erfindung ist der Positionsgeber ein elektrisch leitfähiger Ring mit kreisförmigem Querschnitt. Der Ring wird vorzugsweise abschnittsweise beabstandet von dem Gehäuseteil umgriffen. Aufgrund der Ausbildung des Positionsgebers als rotationssymmetrischer Ring beeinflusst eine Drehung des Positionsgebers die Wegmessung im Wesentlichen nicht.

Der Positionsgeber ist vorzugsweise aus nichtmagnetischem Material, beispielsweise Aluminium oder Kupfer ausgebildet. Derartige nichtmagnetische Materialien sind gegenüber Magnetwerkstoffen robuster und kostengünstiger. Ferritische Teile im Bereich des Positionsgebers, wie Zahnräder und Schaltgabeln in einem Getriebe, beeinflussen das Messergebnis daher nicht. Ein Anhaften von Metallpartikeln wie an Magnetwerkstoffen tritt nicht auf.

Die Positionserkennungsvorrichtung kann für ein Getriebe und/oder eine Bremse, insbesondere für ein Fahrzeuggetriebe oder eine Fahrzeugbremse, mit zumindest einer Schalt- oder Betätigungsstange als Stell-Vorrichtung vorgesehen sein, wobei der Positionsgeber mit der Schalt- oder Betätigungsstange gekoppelt ist. Der Positionsgeber ist vorzugsweise mit der Schalt- oder Betätigungsstange axial verschiebbar in der Ausnehmung geführt.

Vorzugsweise ist der, insbesondere ringförmig ausgebildete, Positionsgeber auf eine Schalt- oder Betätigungsstange aufgeschoben. Hierbei können mehrere Ringe auf die Schalt- oder Betätigungsstange aufgeschoben sein. Der Positionsgeber kann kraft-, stoff- und/oder formschlüssig an der Schalt- oder Betätigungsstange festgelegt sein. Beispielsweise wird der Positionsgeber mittels zumindest einer Schraube oder einer Klebeverbindung an der Schalt- oder Betätigungsstange fixiert.

Erfindungsgemäß ist auch eine Bremseinrichtung mit einer Positionserkennungsvorrichtung vorgesehen, wobei die Stell-Vorrichtung eine Schaltstange ist und die Positionserkennungsvorrichtung zur Erkennung der Position der Betätigungsstange gebildet ist. Dieses erfindungsgemäße Getriebe kann insbesondere ein Fahrzeuggetriebe sein und verwendet zumindest eine derartige Positionserkennungsvorrichtung zur Erkennung der Position mindestens einer Schaltstange des Getriebes.

Erfindungsgemäß ist auch eine Bremseinrichtung mit einer Positionserkennungsvorrichtung vorgesehen, wobei die Stell-Vorrichtung eine Betätigungsstange ist und die Positionserkennungsvorrichtung zur Erkennung der Position der Betätigungsstange gebildet ist. Diese erfindungsgemäße Bremseinrichtung, insbesondere eine Fahrzeugbremseinrichtung, verwendet zumindest eine derartige Positionserkennungsvorrichtung zur Erkennung der Position mindestens einer Betätigungsstange der Bremseinrichtung.

Mittels der Positionserkennungsvorrichtung wird ein berührungsloses Wegmesssystem zur Erkennung der Schaltstangenposition im Getriebe bzw. der Betätigungsstangenposition der Bremseinrichtung bereitgestellt.

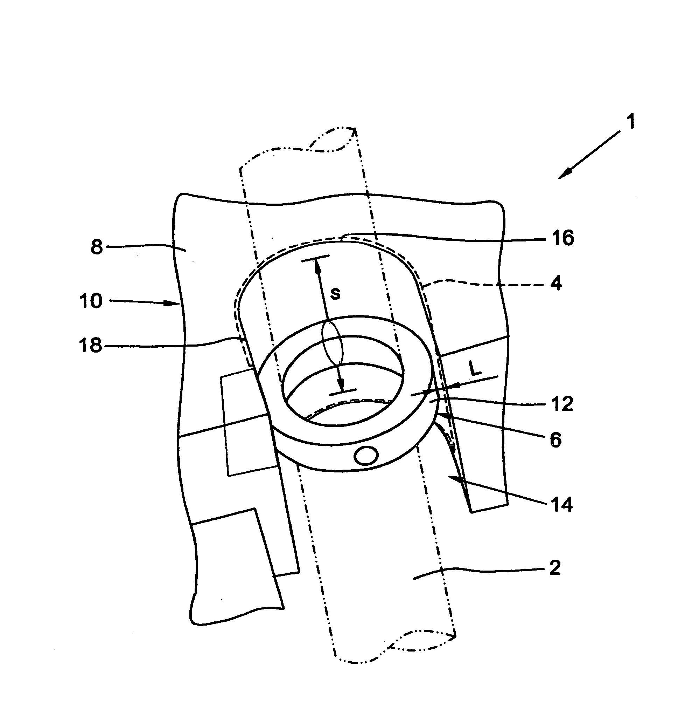

Nachstehend werden Ausführungsbeispiele der Erfindung beschrieben. Die einzige Figur ist eine schematische Darstellung einer Ausführungsform der erfindungsgemäßen Positionserkennungsvorrichtung.

Die Figur zeigt eine schematische Darstellung einer erfindungsgemäßen Positionserkennungsvorrichtung 1, die im Rahmen einer Getriebesteuerung zur berührungslosen Wegmessung einer schematisch angedeuteten Schaltstange 2, mit etwa zylinderförmigem Querschnitt, eines Fahrzeuggetriebes verwendet wird. Die Positionserkennungsvorrichtung 1 weist eine Planarspule 4 auf, die ein Magnetfeld erzeugt und einen im Bereich des Magnetfelds angeordneten Positionsgeber 6. Der Positionsgeber 6 ist relativ zu der Planarspule 4 entlang einer Messstrecke s bewegbar, wobei dieser Wirbelstromverluste erzeugt, die eine Induktivitätsänderung der Planarspule 4 verursachen. Diese Induktivitätsänderung wird mittels einer in einem Gehäuseteil 8 angeordneten Mess- und Auswerteeinrichtung 10 erfasst und daraus die Position des Positionsgebers 6 und damit die Schaltstangenposition des Getriebes ermittelt. Als Positionsgeber 6 ist bei dem dargestellten Ausführungsbeispiel der Erfindung ein elektrisch leitfähiger Aluminium-Ring 12 mit kreisförmigem Querschnitt vorgesehen, der abschnittsweise beabstandet von dem Gehäuseteil 8 umgriffen ist. Aufgrund der Ausbildung des Positionsgebers 6 als rotationssymmetrischer Ring beeinflusst eine Drehung des Positionsgebers 6 die Wegmessung nicht. Das für den Ring 12 verwendete Aluminium ist gegenüber Magnetwerkstoffen robuster und kostengünstiger. Ein Anhaften von Metallpartikeln wie an Magnetwerkstoffen tritt nicht auf. Der Ring 12 ist auf die Schaltstange 2 aufgeschoben und mittels einer nicht dargestellten Schraube an dieser fixiert. Dadurch ist der Ring 12 axial mit einer Stell-Vorrichtung in Form einer Schaltstange 2 bewegbar. Eine Bewegung des Positionsgebers 6 mittels der Stell-Vorrichtung 2 verursacht eine Induktivitätsänderung der Planarspule 4 und die Mess- und Auswerteeinrichtung 10 eine Funktion aufweist, mit der die Induktivitätsänderung der Planarspule 4 erfasst und daraus die Position der Stell-Vorrichtung 2 ermittelt wird.

Die Mess- und Auswerteeinrichtung 10 weist z.B. eine Auswerteelektronik auf, die derart ausgelegt ist, dass diese die Position der Stell-Vorrichtung (2) ermitteln kann und vorzugsweise auch Informationen über den vom Positionsgeber 6 zurückgelegten Weg s bereitstellt. Die Mess- und Auswerteeinrichtung 10 misst hierzu die Induktivitäts- und Güteänderung der Planarspule 4 in Abhängigkeit der Linearposition des Positionsgebers 6 und ermittelt aus diesen Werten die Position des Positionsgebere 6. Die Mess- und Auswerteeinrichtung 10 zur Erfassung und Auswertung der Induktivitätsänderung der Planarspule 6 kann mit bekannten Messverfahren, wie beispielsweise dem Resonanzkreisverfahren arbeiten und ist geeignet, die absolute Position des Positionsgebers 6 anzugeben und/oder den Weg s zu ermitteln, den der Positionsgeber 6 innerhalb eines definierten Zeitraumes zurückgelegt hat.

Das Gehäuseteil 8 umgibt oder umgreift den Positionsgeber 6 abschnittsweise und weist eine Ausnehmung 14 zur radialen Montage und Demontage auf bzw. von der Schaltstange 2 mit dem Positionsgeber 6 auf. Dadurch ist das Gehäuseteil 8 mit der Planarspule 4 fertigungstechnisch einfach, ohne Demontage des Positionsgebers 6 oder der Schaltstange 2 radial auf die Schaltstange 2 aufsetz- und von dieser abnehmbar. Die Planarspule 4 erstreckt sich über den gesamten Weg s weiter bis in einen Rand- oder Kantenbereich des Gehäuseteils 8. Dadurch werden eine Vielzahl von Magnetfeldlinien des Magnetfelds von dem Positionsgeber 6 geschnitten und eine große Änderung der Induktivität bei einer Lageänderung des Positionsgebers 6 erreicht. Die Bedämpfung durch den Positionsgeber 6 verändert die Induktivität und dadurch die Frequenz des als Reihen- oder Parallelschwingkreis ausgebildeten Schwingkreises.

Die Ausnehmung 14 des Gehäuseteils 8 hat einen kreissegmentförmigen Querschnitt, so dass das Gehäuseteil 8 den Positionsgeber 6 in einem Winkelbereich von etwa 200° umgreift. Dadurch wird eine große Auflagefläche 16 für die Planarspule 4 erreicht. Die Planarspule 4 ist bei dem dargestellten Ausführungsbeispiel räumlich getrennt von dem Positionsgeber 6 an einer Innenumfangswandung 18 des Gehäuseteils 8 befestigt und umgreift den Positionsgeber 6 halbkreisförmig in einem Winkelbereich von etwa 180° (Anlegebereich). Dadurch wird eine großflächige Anordnung der Planarspule 4 mit einer entsprechend hohen Feldstärke erreicht, so dass relativ große Luftspalte L zwischen der Planarspule 4 und dem Positionsgeber 6 möglich sind. Da der Positionsgeber 6 näherungsweise kreisförmig umgriffen ist, hat eine Luftspaltänderungen durch seitlichen Versatz des Positionsgebers 6 relativ zu der Ausnehmung 14 des Gehäuseteils 8 lediglich einen geringen Einfluss auf das Messergebnis. Aufgrund der räumlichen Trennung ist die Planarspule 4 geschützt vor äußeren Einflüssen, wie Öl und Metallpartikeln. Dadurch wird eine Verschmutzung der Planarspule 4 wirkungsvoll verhindert und eine dauerhafte Funktion mit hoher Messgenauigkeit sichergestellt. Die Planarspule 4 ist als gedruckte Schaltung auf einer Leiterplatte oder einer flexiblen Folie ausgebildet und entsprechend der Krümmung der Ausnehmung 14 an der Innenumfangswandung 18 des Gehäuseteils 8 fixiert. Die Planarspule 4 kann eine Multilayer-Anordnung aus mehreren Leiterplatten aufweisen. Zur weiteren Steigerung der Induktivität können zwei oder mehr Planarspulen 4 übereinander als Stapel angeordnet werden. Hierbei können einlagige Leiterplatten oder Multilayer-Leiterplatten verwendet werden. Die Planarspule 4 bildet vorzugsweise einen Erreger und einen Aufnehmer aus. Das Magnetfeld der Planarspule 4 erzeugt in dem elektrisch leitenden Positionsgeber 6 einen elektrischen Wirbelstrom. Dieser Wirbelstrom bewirkt ein sekundäres Magnetfeld, welches das ursächliche Magnetfeld überlagert und dämpft. Das ursächliche Magnetfeld wird von der Planarspule 4 erzeugt, so dass ihre Induktivität durch die Feldschwächung lageabhängig verkleinert wird. Diese Induktivitätsänderung wird zur Positionsbestimmung des Positionsgebers verwendet.

Die erfindungsgemäße Positionserkennungsvorrichtung 1 ist nicht auf die beschriebene Anwendung zur berührungslosen Wegmessung einer Schaltstange 2 eines Getriebes beschränkt, vielmehr kann der Positionsgeber 6 an praktisch jedem aus dem Stand der Technik bekannten Bewegungsteil, insbesondere einer Betätigungsstange einer Bremseinrichtung, Verwendung finden.

Offenbart ist eine Positionserkennungsvorrichtung 1 mit zumindest einer Planarspule 4, die ein Magnetfeld erzeugt, und mit mindestens einem im Bereich des Magnetfelds angeordneten Positionsgeber 6, wobei die Planarspule 4 und der Positionsgeber 6 relativ zueinander beweglich sind und der Positionsgeber 6 eine Induktivitätsänderung der Planarspule 4 verursacht, wobei eine Mess- und Auswerteeinrichtung 10 vorgesehen ist, die die Induktivitätsänderung der Planarspule 4 erfasst und daraus die Position des Positionsgebers 6 ermittelt. Erfindungsgemäß ist die Planarspule 4 einem den Positionsgeber 6 abschnittsweise umgreifenden Gehäuseteil 8 zugeordnet, wobei das Gehäuseteil 8 zumindest eine Ausnehmung 14 zur radialen Montage und Demontage auf bzw. von dem Positionsgeber 6 aufweist. Ferner offenbart sind ein Getriebe und eine Bremseinrichtung mit einer derartigen Positionserkennungsvorrichtung 1.

### Bezugszeichenliste

- 1: Positionserkennungsvorrichtung
- 2: Schaltstange
- 4: Planarspule
- 6: Positionsgeber
- 8: Gehäuseteil
- 10: Mess- und Auswerteeinrichtung
- 12: Ring
- 14: Ausnehmung
- 16: Auflagefläche
- 18: Innenumfangswandung

## Patentansprüche

1. Positionserkennungsvorrichtung mit einem Gehäuseteil (8), mit zumindest einer von diesem aufgenommenen und einer Planarspule (4) zur Erzeugung eines Magnetfelds in einem Magnetfeldbereich, mit mindestens einem von einer relativ zum Gehäuseteil (8) bewegbaren Stell-Vorrichtung (2) gehaltenen Positionsgeber (6) und mit einer mit der Planarspule (4) funktional gekoppelten Mess- und Auswerteeinrichtung (10),
▪ wobei der Positionsgeber (6) derart im Magnetfeldbereich angeordnet ist, dass eine Bewegung des Positionsgeber (6) mittels der Stell-Vorrichtung (2) eine Induktivitätsänderung der Planarspule (4) verursacht und die Mess- und Auswerteeinrichtung (10) eine Funktion aufweist, mit der die Induktivitätsänderung der Planarspule (4) erfasst und daraus die Position der Stell-Vorrichtung (2) ermittelt wird,
▪ wobei das Gehäuseteil (8) eine Ausnehmung (14) mit einer Innenwand (18) aufweist, die derart gestaltet ist, dass das Gehäuseteil (8) den Außenumfang der Planarspule (4) abschnittsweise umläuft.

2. Positionserkennungsvorrichtung nach Patentanspruch 1, **dadurch gekennzeichnet, dass** der Positionsgeber (6) ringförmig gebildet ist.

3. Positionserkennungsvorrichtung nach Patentanspruch 2, **dadurch gekennzeichnet, dass** der Positionsgeber (6) einen Querschnitt mit einer kreisförmigen Innenkontur und/oder einer kreisförmigen Außenkontur aufweist.

4. Positionserkennungsvorrichtung nach einem der voranstehenden Patentansprüche, **dadurch gekennzeichnet, dass** der Positionsgeber (6) aus einem elektrisch leitfähigen Material gebildet ist.

5. Positionserkennungsvorrichtung nach einem der voranstehenden Patentansprüche 1 bis 3, **dadurch gekennzeichnet, dass** der Positionsgeber (6) aus einem nichtmagnetischem Material gebildet ist.

6. Positionserkennungsvorrichtung nach Patentanspruch 5, **dadurch gekennzeichnet, dass** der Positionsgeber (6) aus Aluminium und/oder Kupfer gebildet ist.

7. Positionserkennungsvorrichtung nach einem der voranstehenden Patentansprüche, **dadurch gekennzeichnet, dass** die Ausnehmung (14) des Gehäuseteils (8) einen Querschnitt aufweist, bei dem die Ausnehmung (14) bei Aufnahme des Positionsgebers (6) ein Zentrum desselben mit einem Winkelbereich umgibt, der zwischen 90 Grad und 200 Grad gelegen ist.

8. Positionserkennungsvorrichtung nach dem Patentanspruch 7, **dadurch gekennzeichnet, dass** die Ausnehmung (14) einen Querschnitt mit einer kreisabschnittsförmigen Innenkontur aufweist, die einen Öffnungswinkel zwischen 90 Grad und 200 Grad hat.

9. Positionserkennungsvorrichtung nach dem Patentanspruch 8, **dadurch gekennzeichnet, dass** die Innenkontur der Ausnehmung (14) U-förmig mit einem Kreisabschnitt und entgegen gesetzt zueinander verlaufenden Seiten gebildet ist.

10. Positionserkennungsvorrichtung nach dem Patentanspruch 9, **dadurch gekennzeichnet, dass** die Seiten der U-förmigen Ausnehmung (14) parallel zueinander verlaufen.

11. Positionserkennungsvorrichtung nach einem der voranstehenden Patentansprüche, **dadurch gekennzeichnet, dass** die Planarspule (4) beabstandet von dem Positionsgeber (6) am oder im Gehäuseteil (8) angeordnet ist.

12. Positionserkennungsvorrichtung nach einem der vorhergehenden Patentansprüche, **dadurch gekennzeichnet, dass** die Planarspule (4) einen Erreger und einen Aufnehmer ausbildet.

13. Positionserkennungsvorrichtung nach einem der vorhergehenden Patentansprüche, **dadurch gekennzeichnet, dass** die Planarspule (4) eine auf eine Leiterplatte und/oder eine flexiblen Folie gedruckte Schaltung aufweist.

14. Positionserkennungsvorrichtung nach dem Patentanspruch 13, **dadurch gekennzeichnet, dass** die Planarspule (4) eine Multilayer-Anordnung aufweist.

15. Positionserkennungsvorrichtung nach dem Patentanspruch 14, **dadurch gekennzeichnet, dass** zwei Planarspulen (4) von der Ausnehmung (14) aus gesehen übereinander angeordnet sind.

16. Positionserkennungsvorrichtung nach einem der vorhergehenden Patentansprüche, **dadurch gekennzeichnet, dass** die Funktion der Mess- und Auswerteeinrichtung (10) derart gestaltet ist, dass diese einen vom Positionsgeber (6) zurückgelegten Weg (s) ermitteln kann.

17. Positionserkennungsvorrichtung nach einem der vorhergehenden Patentansprüche, die Stell-Vorrichtung (2) eine Betätigungsstange ist.

18. Positionserkennungsvorrichtung nach einem der vorhergehenden Patentansprüche 2 bis 17, **dadurch gekennzeichnet, dass** der Positionsgeber (6) auf die Betätigungsstange (2) oder Betätigungsstange aufgeschoben ist.

19. Positionserkennungsvorrichtung nach dem Patentanspruch 18, **dadurch gekennzeichnet, dass** der Positionsgeber (6) kraft-, stoff- und/oder formschlüssig an der Betätigungsstange (2) fixiert ist.

20. Positionserkennungsvorrichtung nach dem Patentanspruch 18, **dadurch gekennzeichnet, dass** der Positionsgeber (6) an der Betätigungsstange (2) axial verschiebbar und die Betätigungsstange (2) derart in der Ausnehmung (14) angeordnet ist, dass der Positionsgeber (6) innerhalb der Ausnehmung (14) geführt ist.

21. Bremseinrichtung mit einer Positionserkennungsvorrichtung (1) nach einem der Patentansprüche 1 bis 20, **dadurch gekennzeichnet, dass** die Stell-Vorrichtung eine Betätigungsstange ist und die Positionserkennungsvorrichtung (1) zur Erkennung der Position der Betätigungsstange gebildet ist.

22. Getriebe mit einer Positionserkennungsvorrichtung (1) nach einem der Patentansprüche 1 bis 20, **dadurch gekennzeichnet, dass** die Stell-Vorrichtung eine Schaltstange ist und die Positionserkennungsvorrichtung (1) zur Erkennung der Position der Betätigungsstange gebildet ist.

## Claims

1. Position recognition device comprising a housing element (8), at least one planar coil (4) accommodated in that housing for generating a magnetic field in a magnetic field area, comprising at least one position transmitter (8) held by a setting device (2) movable relative to said housing element (8), and comprising a measuring and analyzer means (10) functionally coupled to said planar coil (4),
▪ wherein said position transmitter (6) is so disposed in said magnetic field area that a movement of said position transmitter (6) by means of said setting device (2) causes a change of inductance of said planar coil (4) and said measuring and analyzer means (10) displays a function by which said change of inductance of said planar coil (4) is detected and the position of said setting device (2) is derived therefrom,
▪ with said housing element (8) being provided with a recess (14) having an inner wall (18) that is so designed that said housing element (8) extends around the external periphery of said planar coil (4) in sections.

2. Position recognition device according to patent claim 1, **characterised in that** said position transmitter (6) has a ring-shaped configuration.

3. Position recognition device according to patent claim 2, **characterised in that** said position transmitter (6) is provided with a cross-section having a circular inside contour and/or a circular outside contour.

4. Position recognition device according to any of the preceding patent claims, **characterised in that** said position transmitter (6) is made of an electrically conductive material.

5. Position recognition device according to any of the preceding patent claims 1 to 3, **characterised in that** said position transmitter (6) is made of a non-magnetic material.

6. Position recognition device according to patent claim 5, **characterised in that** said position transmitter (6) is made of aluminium and/or copper.

7. Position recognition device according to any of the preceding patent claims, **characterised in that** said recess (14) of said housing element (8) is provided with a cross-section in which said recess (14) surrounds a centre of said position transmitter with an angular range comprised between 90 degrees and 200 degrees when said position transmitter (6) is accommodated therein.

8. Position recognition device according to patent claim 7, **characterised in that** said recess (14) presents a cross-section having an inner contour in the form of a segment of a circle, which has an opening angle comprised between 90 degrees and 200 degrees.

9. Position recognition device according to patent claim 8, **characterised in that** the inner contour of said recess (14) is U-shaped with a segment of a circle and is provided with sides extending in opposition relative to each other.

10. Position recognition device according to patent claim 9, **characterised in that** the sides of said U-shaped recess (14) extend in parallel with each other.

11. Position recognition device according to any of the preceding patent claims, **characterised in that** said planar coil (4) is disposed on or in said housing element (8) and is spaced from said position transmitter (6).

12. Position recognition device according to any of the preceding patent claims, **characterised in that** said planar coil (4) forms an exciter and a receiver.

13. Position recognition device according to any of the preceding patent claims, **characterised in that** said planar coil (4) comprises a circuit printed on a circuit board and/or a flexible film.

14. Position recognition device according to patent claim 1, **characterised in that** said planar coil (4) presents a multi-layer arrangement.

15. Position recognition device according to patent claim 14, **characterised in that**, seen from said recess (14), two planar coils (4) are disposed one on top of the other.

16. Position recognition device according to any of the preceding patent claims, **characterised in that** the function of said measuring and analyzer means (10) is so designed that the means is able to detect a distance (s) covered by said position transmitter (6).

17. Position recognition device according to any of the preceding patent claims, **characterised in that** said setting device (2) is an activation rod.

18. Position recognition device according to any of the preceding patent claims 2 to 17, **characterised in that** said position transmitter (6) is pushed onto said activation rod (2) or an activation rod.

19. Position recognition device according to patent claim 18, **characterised in that** said position transmitter (6) is fixed on said activation rod (2) in a force-fitting, material-fitting and/or interlocking manner on said activation rod.

20. Position recognition device according to patent claim 18, **characterised in that** said position transmitter (6) is axially displaceable along said activation rod and that said activation rod (2) is so disposed in said recess (14) that said position transmitter (6) is guided within said recess (14).

21. Braking system comprising a position recognition device (1) according to any of the patent claims 1 to 20, **characterised in that** said setting device is an activation rod and that said position recognition device (1) is designed for recognizing the position of said activation rod.

22. Transmission comprising a position recognition device (1) according to any of the patent claims 1 to 20, **characterised in that** said setting device is a switch rod and that said position recognition device (1) is designed for recognizing the position of said activation rod.

## Revendications

1. Dispositif de détection de position comprenant a élément de carter (8), au moins un inducteur planaire (4) reçu dans ledit carter afin d'engendre un champ magnétique dans une région de champ magnétique, comprenant au moins un générateur d'information de position (8) tenu par un dispositif de réglage (2) mobile relativement audit élément de carter (8), et comprenant un moyen de mesure et d'analyse (10) accouplé, par fonction, audit inducteur planaire (4),
▪ dans lequel ledit générateur d'information de position (6) est disposé dans ladite région de champ magnétique d'une façon, qu'un mouvement dudit générateur d'information de position (6) moyennant ledit dispositif de réglage (2) provoque un changement de l'inductance dudit inducteur planaire (4) et ledit moyen de mesure et d'analyse (10) réalise une fonction par laquelle ledit changement de l'inductance dudit inducteur planaire (4) est détectée et la position dudit dispositif de réglage (2) est en dérivée,
▪ audit élément de carter (8) étant muni d'un évidement (14) ayant une paroi intérieure (18) conçu de façon, que ledit élément de carter (8) s'étende, en tronçons, autour de la périphérie extérieure dudit inducteur planaire (4).

2. Dispositif de détection de position selon la revendication 1, **caractérisé en ce que** ledit générateur d'information de position (6) est pourvu d'une configuration annulaire.

3. Dispositif de détection de position selon la revendication 2, **caractérisé en ce que** ledit générateur d'information de position (6) est doté d'une coupe transversale ayant un contour circulaire intérieur et ou un contour extérieur.

4. Dispositif de détection de position selon une quelconque des revendications précédentes, **caractérisé en ce que** ledit générateur d'information de position (6) est fait en un matériau électriquement conducteur.

5. Dispositif de détection de position selon une quelconque des revendications précédentes 1 à 3, **caractérisé en ce que** ledit générateur d'information de position (6) est fait en un matériau non magnétique.

6. Dispositif de détection de position selon la revendication 5, **caractérisé en ce que** ledit générateur d'information de position (6) est fait en aluminium et/ou cuivre.

7. Dispositif de détection de position selon une quelconque des revendications précédentes, **caractérisé en ce que** ledit évidement (14) dudit élément de carter (8) présente une coupe transversale, dans laquelle ledit évidement (14) entoure un centre dudit générateur d'information de position à une gamme angulaire comprise entre 90 degrés et 200 degrés, quand ledit générateur d'information de position (6) est y reçu.

8. Dispositif de détection de position selon la revendication 7, **caractérisé en ce que** ledit évidement (14) présente une coupe transversale ayant un contour intérieur sous la forme d'un secteur circulaire, qui a un angle d'ouverture compris entre 90 degrés et 200 degrés.

9. Dispositif de détection de position selon la revendication 8, **caractérisé en ce que** le contour intérieur dudit évidement (14) a une forme en U, à un secteur circulaire, en étant muni des côtés, qui s'étendent en sens opposé l'une à l'autre.

10. Dispositif de détection de position selon la revendication 9, **caractérisé en ce que** les côtés dudit évidement en U (14) s'étendent en parallèle l'une à l'autre.

11. Dispositif de détection de position selon une quelconque des revendications précédentes, **caractérisé en ce que** ledit inducteur planaire (4) est disposé audit ou dans ledit élément de carter (8), en étant écarté dudit générateur d'information de position (6).

12. Dispositif de détection de position selon une quelconque des revendications précédentes, **caractérisé en ce que** ledit inducteur planaire (4) constitue un excitateur et un récepteur.

13. Dispositif de détection de position selon une quelconque des revendications précédentes, **caractérisé en ce que** ledit inducteur planaire (4) comprend un imprimé sur une carte imprimée et/ou un film flexible.

14. Dispositif de détection de position selon la revendication 1, **caractérisé en ce que** ledit inducteur planaire (4) présente un arrangement multicouche.

15. Dispositif de détection de position selon la revendication 14, **caractérisé en ce que**, vu à partir dudit évidement (14), deux inducteurs planaires (4) sont disposés en superposition.

16. Dispositif de détection de position selon une quelconque des revendications précédentes, **caractérisé en ce que** la fonction dudit moyen de mesure et d'analyse (10) est conçu de façon, que ce moyen soit capable de détecter un chemin (s) parcouru par ledit générateur d'information de position (6).

17. Dispositif de détection de position selon une quelconque des revendications précédentes, **caractérisé en ce que** ledit dispositif de réglage (2) est une tige d'actionnement.

18. Dispositif de détection de position selon une quelconque des revendications précédentes 2 à 17, **caractérisé en ce que** ledit générateur d'information de position (6) est enfilé sur ladite tige d'actionnement (2) ou une tige d'actionnement.

19. Dispositif de détection de position selon la revendication 18, **caractérisé en ce que** ledit générateur d'information de position (6) est fixé sur ladite tige d'actionnement (2) par adhérence, en connexion par matière, et/ou de manière mécanique sur ladite tige d'actionnement.

20. Dispositif de détection de position selon la revendication 18, **caractérisé en ce que** ledit générateur d'information de position (6) est axialement déplaçable le long de ladite tige d'actionnement, et **en ce que** ladite tige d'actionnement (2) set disposée dans ledit évidement (14) de façon, que ledit générateur d'information de position (6) soit guidé au-dedans dudit évidement (14).

21. Système de freinage comprenant a dispositif de détection de position (1) selon une quelconque des revendications 1 à 20, **caractérisé en ce que** ledit dispositif de réglage est une tige d'actionnement, et **en ce que** ledit dispositif de détection de position (1) est conçu pour la détection de la position de ladite tige d'actionnement.

22. Boîte de vitesses comprenant un dispositif de détection de position (1) selon une quelconque des revendications 1 à 20, **caractérisé en ce que** ledit dispositif de réglage est une tige de commutation, et **en ce que** ledit dispositif de détection de position (1) est conçu pour la détection de la position de ladite tige d'actionnement.
